# EUROPÄISCHE PATENTSCHRIFT

(11) **EP 1 446 605 B1**
(45) Veröffentlichungstag und Bekanntmachung des Hinweises auf die Patenterteilung: **03.09.2008**
(21) Anmeldenummer: 02791692.3
(22) Anmeldetag: 20.11.2002
(51) Int. Cl.: F16L 37/092

(54) **SCHNELLKUPPLUNG FÜR ROHRE**
QUICK-RELEASE COUPLING FOR PIPES
RACCORD RAPIDE POUR TUYAUX

(30) Priorität: 23.11.2001 DE 10157304; 21.03.2002 DE 10212735
(43) Veröffentlichungstag der Anmeldung: 18.08.2004
(73) Patentinhaber: Georg Fischer Haustechnik AG, 8201 Schaffhausen (CH)
(72) Erfinder: BAMBERGER, Michael, 78262 Gailingen (DE); HEER, Peter, DE-79807 Lottstetten (DE); PINARDI, Renato, CH-8200 Schaffhausen (CH); PORFIDO, Erasmo, CH-8234 Stetten (CH)
(74) Vertreter: Weiss, Wolfgang
(86) Internationale Anmeldenummer: PCT/EP2002/012998
(87) Internationale Veröffentlichungsnummer: WO 2003/044416

(56) Entgegenhaltungen:
- US-A- 4 712 810
- US-A- 4 722 558
- US-A- 5 553 901

## Beschreibung

Die Erfindung betrifft eine Schnellkupplung für Rohre mit einem rohrförmigen Innenteil, einer Innenhülse, einem Klemmring, einem teilkreisförmige Zähne aufweisenden Zahnring und einer Aussenhülse.

Im Rohrleitungsbau, insbesondere für Rohrleitungssysteme der Haustechnik, das heisst für die gebäudeinterne Versorgung mit Warm- und Kaltwasser für den Sanitärbereich und für die Heizungskreisläufe, werden zunehmend Kunststoffrohrleitungen verwendet. Vor allem bei Heizsystemen mit in den Böden eingelegten Warmwasserleitungen müssen für jeden beheizbaren Raum mindestens zwei Kupplungen hergestellt werden. Für ein übliches Einfamilienhaus sind etwa 20 bis 30 Kupplungen notwendig. Die Kupplungen müssen schnell, sicher und dauerhaft eingesetzt werden können.

Aus der DE 196 45 853 C1 ist eine gattungsgemässe Schnellkupplung bekannt. Ein Verbindungsbereich eines Adapters nimmt das Ende einer Rohrleitung auf. Der Verbindungsbereich des Adapters umfasst von aussen nach innen eine konisch ausgebildete Verbindungshülse, einen Klemmkonus, der mit der Verbindungshülse zusammenwirkt und der von einer Feder in axialer Richtung unter Federspannung gehalten wird. Der Klemmkonus weist auf der dem Rohr zugewandten Seite Verzahnungselemente auf, die in die Aussenwand des Rohres einwirken. Das Rohrleitungsende wird in den Adapter eingeführt. Wenn ein Arretierbügel, der die Feder unter Vorspannung hält, weggezogen wird, drückt die Feder den Klemmkonus mit einer definierten Kraft in die ebenso konisch ausgebildete Klemmhülse und die Verzahnungselemente greifen in die Rohraussenwand ein. Diese Schnellkupplung wird als ein Teil eines anpassungsfähigen Rohrleitungsinstallationssystems für mediumsführende Rohrleitungen für einen grossen Druck- und Temperaturbereich verwendet. Die Schnellkupplung ist im Wesentlichen aus Metallteilen zusammengesetzt.

Ausgehend von diesem Stand der Technik ist es Aufgabe der Erfindung, eine Schnellkupplung anzugeben, die aus möglichst wenig Einzelteilen aufgebaut ist, die mit dem Rohrleitungssystem kompatibel ist und die kostengünstig, sowohl in der Herstellung als auch in dem Zusammenbau auf der Baustelle, hergestellt werden kann. Die Schnellkupplung soll auch ohne Zuhilfenahme von Installationswerkzeugen eine absolut sichere und zuverlässige Verbindung gewährleisten.

Diese Aufgabe wird gelöst durch eine Schnellkupplung für Rohre mit einem rohrförmigen Innenteil, einer Innenhülse, einem Klemmring, einem teilkreisförmige Zähne aufweisenden Zahnring und einer Aussenhülse, wobei die Aussenhülse einen zylindrischen Bereich mit mindestens zwei unterschiedlichen Innendurchmessern und einen konischen Bereich zur Aufnahme des Klemmringes aufweist und wobei die Innenhülse aus zwei nahezu gleichen halbkreisförmigen Schalenteilen zusammengesetzt ist.

Die Schnellkupplung ist aus möglichst wenigen Einzelteilen aufgebaut. Der Zusammenbau der Schnellkupplung mit dem Rohrleitungssystem auf der Baustelle umfasst möglichst wenige Schritte.

Zur Erreichung einer einfachen Handhabung der Kupplung ist die Innenhülse aus zwei nahezu gleichen Hälften zusammengesetzt.

Die Handhabung wird weiter vereinfacht durch die Ausbildung von Haltefingern an der Innenhülse zum Festhalten des Zahnringes vor dem Zusammenbau auf der Baustelle.

Bevorzugt sind die Teile der Schnellkupplung im Wesentlichen aus Kunststoff ausgeführt, wobei in vorteilhafter Weise die Aussenhülse und/oder Innenhülse durchsichtig sind.

Aus Sicherheitsgründen, d.h. zur Überprüfung der korrekten Verbindung der Kupplung mit der Rohrleitung, sind die Aussenhülse und/oder die Innenhülse aus einem durchsichtigen Kunststoff hergestellt. Ebenso sind an geeigneter Stelle angeordnete Sichtfenster denkbar.

Weitere erfindungsgemässe Merkmale sind in den übrigen Unteransprüchen aufgeführt. Zur Stützung der Ansprüche wird auf die Beschreibung der Figuren 1 bis 10 verwiesen.

Ein erfindungsgemässes Ausführungsbeispiel ist in der Zeichnung dargestellt. Es zeigen:
Figur 1 eine Schnittansicht der Schnellkupplung ohne eine zu verbindende Rohrleitung,
Figur 2 eine dreidimensionale Ansicht der Innenhülse, des Zahnringes und des Klemmringes,
Figur 3 eine Schnittansicht der Schnellkupplung mit Rohrleitung im eingebauten Zustand vor der ersten Inbetriebnahme der Rohrleitung,
Figur 4 eine Schnittansicht der Schnellkupplung mit Rohrleitung im eingebauten Zustand nach der Druckbeaufschlagung der Rohrleitung,
Figur 5 eine mögliche Anwendung der Schnellkupplung,
Figur 6 eine Schnittansicht der Schnellkupplung in einem zweiten Ausführungsbeispiel mit noch nicht verbundener Rohrleitung,
Figur 7 eine dreidimensionale Ansicht der Innenhülse mit Zahnring und Klemmring aus Figur 6,
Figur 8 eine Schnittansicht der Schnellkupplung mit Rohrleitung in einer Zwischenphase,
Figur 9 eine Schnittansicht der Schnellkupplung mit Rohrleitung im eingebauten Endzustand,
Figur 10 eine weitere mögliche Anwendung der Schnellkupplung,
Figur 11 eine teilweise geschnittene Sicht auf einen Ausschnitt eines Rohrleitungssystems mit zwei Schnellkupplungen, die nicht Teile der Erfindung sind,
Figur 12 eine Sicht auf den Ausschnitt des Rohrleitungssystems von Figur 11 im zusammengebauten Zustand,
Figur 13 einen Schnitt durch einen Adapter der Schnellkupplungen von Figur 11 und 12 vor dem Zusammenbau,
Figur 14 einen Schnitt durch den Adapter von Figur 13 in einer ersten Phase des Zusammenbaus,
Figur 15 einen Schnitt durch den Adapter von Figur 14 in einer letzten Phase des Zusammenbaus,
Figur 16 einen Schnitt durch den Adapter von Figur 15 in einem mit Mediumsdruck beaufschlagten Rohrleitungssystem, und
Figuren 17 bis 19 weitere Anwendungsbeispiele der Schnellkupplung, die nicht Teile der Erfindung sind.

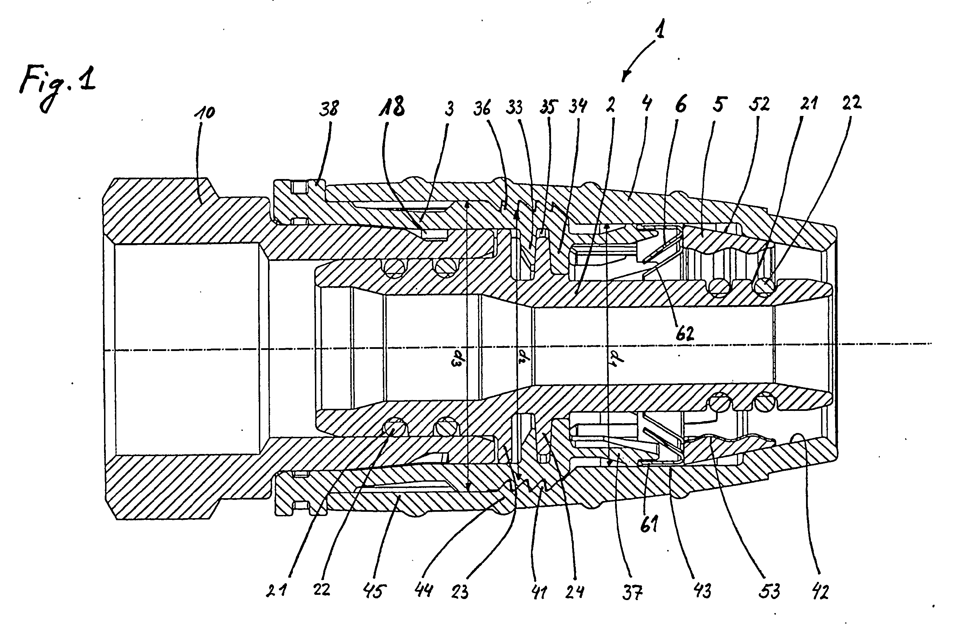

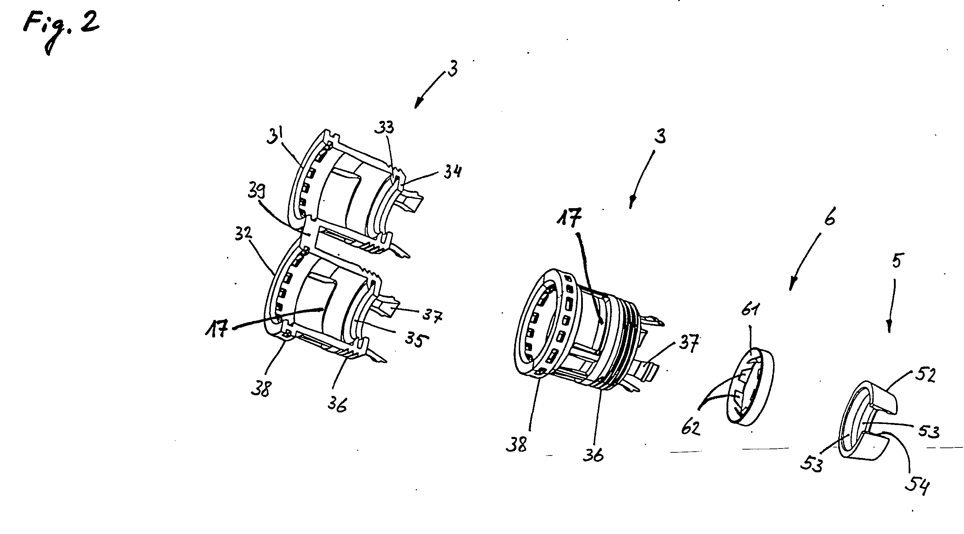

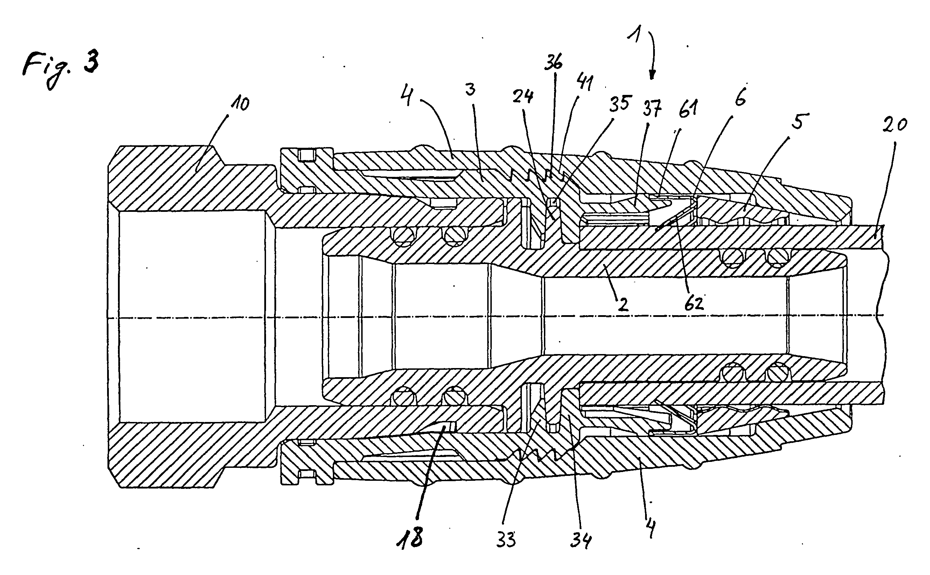

Die Figur 1 zeigt eine Schnittansicht der Schnellkupplung 1 für die Verbindung mit einer Rohrleitung, die in Figur 2 und 3 zu sehen ist. Die Schnellkupplung 1 besteht aus einem nippelförmigen im Wesentlichen zylindrisch ausgebildeten Innenteil 2, einer Innenhülse 3, einer Aussenhülse 4, einem Klemmring 5 und einem Zahnring 6. Mit Ausnahme des Zahnringes 6 aus Metall sind alle Teile der Schnellkupplung 1 aus Kunststoffmaterial in einem Spritzgussverfahren herstellbar. Die Schnellkupplung 1 dient zur Herstellung einer Verbindung zwischen einer hier nicht dargestellten Rohrleitung und einem Rohrverbindungsteil 10. Auf der rechten Seite des Innenteils 2 kann die Rohrleitung wie auf einem Nippel aufgeschoben und verbunden werden und auf der gegenüberliegenden linken Seite des Innenteils 2 ist das Rohrverbindungsteil 10 wie auf einem Nippel aufgeschoben dargestellt.

Auf der Aussenseite des zylindrischen Innenteils 2 sind Rillen 21 ausgebildet, in die O-Ringdichtungen 22 angeordnet sind. Hiermit wird eine Abdichtung des Mediums in dem Rohrleitungssystem gegen Aussen gewährleistet. Etwa in der Mitte zwischen den zwei nippelförmigen Bereichen mit den Rillen 21 und den O-Ringdichtungen 22 sind am Aussenumfang des Innenteils 2 zwei unterschiedliche Vorsprünge 23,24 ausgebildet. Ein erster Vorsprung 23 dient als Anschlag für das Rohrverbindungsteil 10 und ein zweiter Vorsprung 24 dient zur Aufnahme der Innenhülse 3.

Die Innenhülse 3 ist aus mindestens zwei teilkreisförmigen Teilen, beispielsweise aus zwei Halbschalen 31,32 aufgebaut. Die Halbschalen 31,32 der Innenhülse 3 werden in einem Guss auf einer Kunststoffspritzgussanlage hergestellt, können mit einander durch einen kleinen Steg 39 verbunden sein und paarweise hergestellt werden. Die Innenhülse 3 kann auch aus mehreren teilkreisförmigen Schalenteilen 31,32 hergestellt werden. Auf der Innenseite der Innenhülse 3 sind weitere Vorsprünge 33,34 ausgebildet. Zwischen dem ersten Vorsprung 33 und dem zweiten Vorsprung 34 ist eine Rille 35 mit einer definierten Geometrie ausgebildet. Die Geometrie dieser Rille 35 stimmt genau überein mit der Geometrie des zweiten Vorsprungs 24 des Innenteils 2. In der Vormontage der Schnellkupplung 1 werden die Schalenteile 31,32 auf dem Innenteil 2 gelegt und zugeklappt. Hierbei wird die Rille 35 genau mit dem zweiten Vorsprung 24 des Innenteils 2 ausgefüllt. Durch die übereinstimmenden Geometrien von Rille 35 und Vorsprung 24 ist eine fehlerhafte Vormontage ausgeschlossen.

Auf der Aussenseite weist die Innenhülse 3 im Bereich der Vorsprünge 33,34 ein Aussengewinde 36 auf, das zusammenwirkt mit einem Innengewinde 41, das auf der Innenseite der Aussenhülse 4 ausgebildet ist. Auf der rechten Seite der Innenhülse 3, das heisst auf der Seite der Rohrleitung, sind an der Innenhülse 3 mehrere Finger 37 ausgebildet. An den freien Enden der Finger 37 sind die radial nach Aussen weisenden Flächen der Finger 37 derart ausgebildet, dass, zumindest in der Vormontage, der Zahnring 6 von diesen Fingeraussenflächen getragen wird. Die Finger 37 sind relativ schlank und federnd an der Innenhülse 3 angeformt. Die Finger 37 können auch durch mehrere Schlitze in die Wand der Innenhülse 3 ausgebildet werden. Durch die Vorspannung der federnden Finger 37 kann der Zahnring 6 sich in der Vormontage nicht von der Innenhülse 3 lösen und kann nicht leicht verloren gehen. Wenn der Zahnring 6 aus Metall am Aussenumfang über 360° durchgehend ausgebildet ist, werden die Schalenteile 31,32 nach dem Zuklappen um das Innenteil 1 auch teilweise zusammengehalten. Hierdurch wird die Vormontage der Schnellkupplung 1 weiter vereinfacht.

Auf der Seite der Rohrleitung ist, anschliessend an dem Zahnring 6, innerhalb der Aussenhülse 4 der Klemmring 5 angeordnet. Die Aussenhülse 4 umschliesst auf einander folgend den Klemmring 5, den Zahnring 6 und die Innenhülse 3. Die Aussenhülse 4 weist von der Rohrleitung aus gesehen hintereinander vier unterschiedliche Bereiche mit unterschiedlichen Aufgaben auf: Einen konischen Bereich mit einer konisch ausgebildeten Innenfläche 42, die zusammenwirkt mit der ebenso konisch ausgebildeten Aussenfläche 52 des Klemmringes 5, einen darauf anschliessenden ersten zylindrischen Bereich 43 mit einem Innendurchmesser d1 zur Aufnahme der Aussenwand 61 des Zahnringes 6 und den Fingern 37 der Innenhülse 3, einen weiteren zylindrischen Bereich 44 mit dem Innengewinde 41 mit einem Innendurchmesser d2 und einen letzten zylindrischen Bereich 45 mit einem Innendurchmesser d3 zum Festhalten der Schalenteile 31,32 der Innenhülse 3. Die Innenhülse 3 weist einen Randbereich 38 mit einem grösseren Aussendurchmesser als den Rest der Aussenhülse auf. Dieser Randbereich wirkt beim Aufschrauben der Aussenhülse 4 als einen Anschlag 38 für die Aussenhülse 4.

Der Klemmring 5 ist an der Mantelfläche 52 konisch ausgebildet und entsprechend dem konischen Innenbereich 42 der Aussenhülse 4 angepasst. Weiterhin weist der Klemmring 5 im Innenbereich mindestens einen Vorsprung 53 auf. Die Vorsprünge 53 dienen zur Erhöhung des Druckes, der im mit der Rohrleitung zusammengebauten Zustand der Schnellkupplung 1 auf die Rohrleitung wirkt. Die Mantelfläche 52 des konischen Klemmringes 5 befindet sich zu jedem Zeitpunkt, das heisst, sowohl nach der Vormontage als im fertig eingebauten Zustand, stets zumindest bereichsweise in Kontakt mit der konischen Innenfläche 42 der Aussenhülse 4. Die Innenhülse 3 und/oder Aussenhülse 4 ist aus durchsichtigem Material, beispielsweise Kunststoff gefertigt.

In Figur 2 sind die Innenhülse 3, der Zahnring 6 und der Klemmring 5 dreidimensional dargestellt. Um die Montage zu erleichtern, kann die Innenhülse 3 aus zwei Halbschalen 31 und 32 gefertigt sein, wobei die Halbschalen 31 und 32 mittels eines Steges 39 verbunden sind. Alle anderen Bezugszeichen entsprechen denen der Figur 1. Der Zahnring 6 weist am Innenumfang Zähne 62 zur Arretierung der Rohrleitung auf. Die konische Aussenfläche 52 und die Vorsprünge 53 wurden bereits bei Figur 1 beschrieben. Der konische Klemmring 5 weist einen Schlitz 54 auf. Der Klemmring 5 wird vor dem ersten Einführen in den konischen Bereich der Aussenhülse 4 vorgespannt. Die Vorspannung des Klemmringes 5 dient dazu, dass der Zahnring 6 auf den Fingern 37 der Innenhülse 3 unverschiebbar gehalten wird.

Die Montage der Schnellkupplung 1 geschieht in der Weise, dass in einem ersten Schritt nach dem Aufbringen der O-Ringe 22 in die Rillen 21 des Innenteils 2 die beiden Hälften 31 und 32 entsprechend passend auf das Innenteil 2 aufgebracht werden, wobei der Vorsprung 24 des Innenteils 2 in die Rille 35 der Innenhülse 3 eingreift. Der Vorsprung 24 passt genau zu der Rille 35. Die beiden Hälften 31 und 32 sind so gefertigt, dass sich im geschlossenen, zugeklappten Zustand ein geschlossenes Aussengewinde 36 ergibt, welches mit dem Innengewinde 41 der Aussenhülse 4 zusammenwirkt. Im zweiten Schritt wird der Zahnring 6 auf die Finger 37 der zusammengeklappten Innenhülse 3 geschoben und auf die Aussenflächen der Finger 37 festgehalten.

In einem dritten Schritt wird der Klemmring 5 in die Aussenhülse 4 unter Vorspannung eingelegt. In einem vierten Schritt wird schliesslich die Aussenhülse 4 bis zum Anschlag 38 auf die Innenhülse 3 aufgeschraubt. Die Schnellkupplung 1 ist somit für den Einsatz auf der Baustelle vormontiert. Beim Einführen des Rohrverbindungsteiles 10 rasten Rastfinger 17, die an der Innenhülse 3 federnd ausgebildet sind, in eine Rille 18 des Rohrverbindungsteiles 10 ein. Die Rille 18 ist in den Figuren 1, 3 und 4 ersichtlich. Die Anordnung der Rastfinger 17 an den Halbschalen der Innenhülse 3 ist am besten ersichtlich in Figur 2.

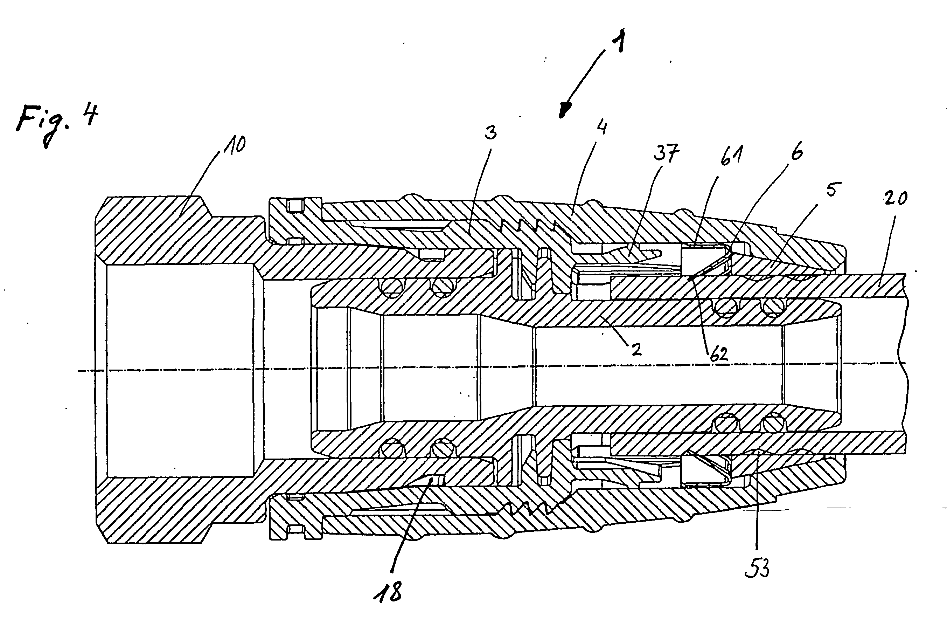

Die Funktionsweise der Schnellkupplung 1 ist in den Figuren 3 und 4 dargestellt. Im drucklosen Zustand wird eine Rohrleitung 20 gemäss Figur 3 bis zum ersten Vorsprung 34 der Innenhülse 3 in die Schnellkupplung 1 eingeführt. Wird die Rohrleitung 20 mit Druck beaufschlagt, so entsteht die Situation gemäss Figur 4. Die Rohrleitung 20 verschiebt sich etwas vom Vorsprung 34 der Innenhülse 3 weg und wird aufgrund der im Zahnring 6 angeordneten Zähne 62 und mit den Vorsprüngen 53 des Klemmringes 5 festgehalten, so dass eine sichere Verbindung entsteht.

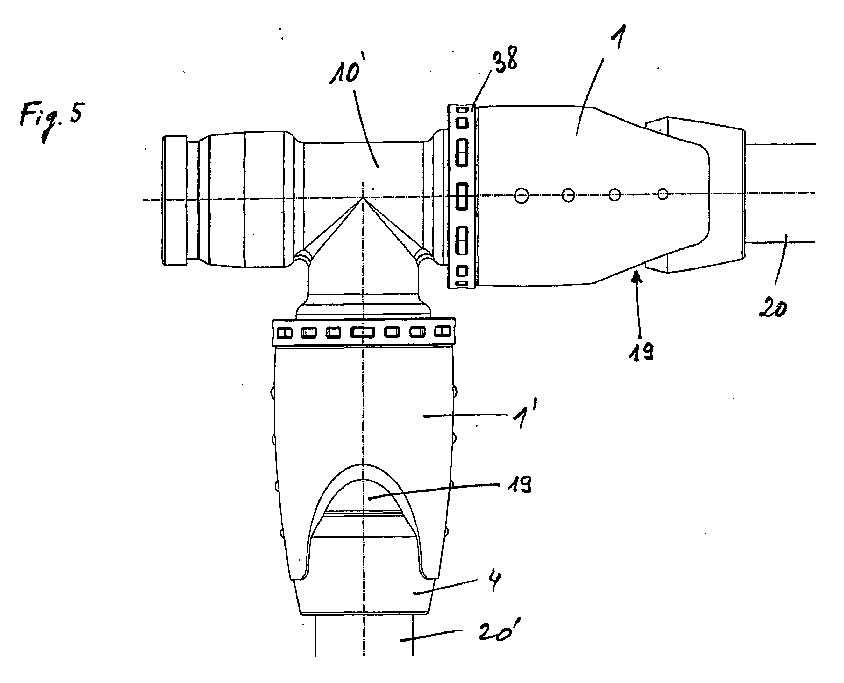

In Figur 5 ist ein Anwendungsfall der Schnellkupplung 1 gezeigt. Jeweils zwei Schnellkupplungen 1, 1' sind mit den Enden eines Rohrverbindungsteiles 10', das hier beispielsweise als T-Fitting ausgebildet ist, verbunden. Zur Überprüfung einer sicheren Verbindung weisen die Schnellkupplungen 1, 1' Sichtfenster 19 auf, oder sie bestehen aus einem durchsichtigen Material. Beim Verbinden der Kupplung mit dem T-Fitting 10' wird durch das Einrasten der Rastfinger 17 in die Rille 18 ein akustisches Signal in Form eines "Klicks" erzeugt.

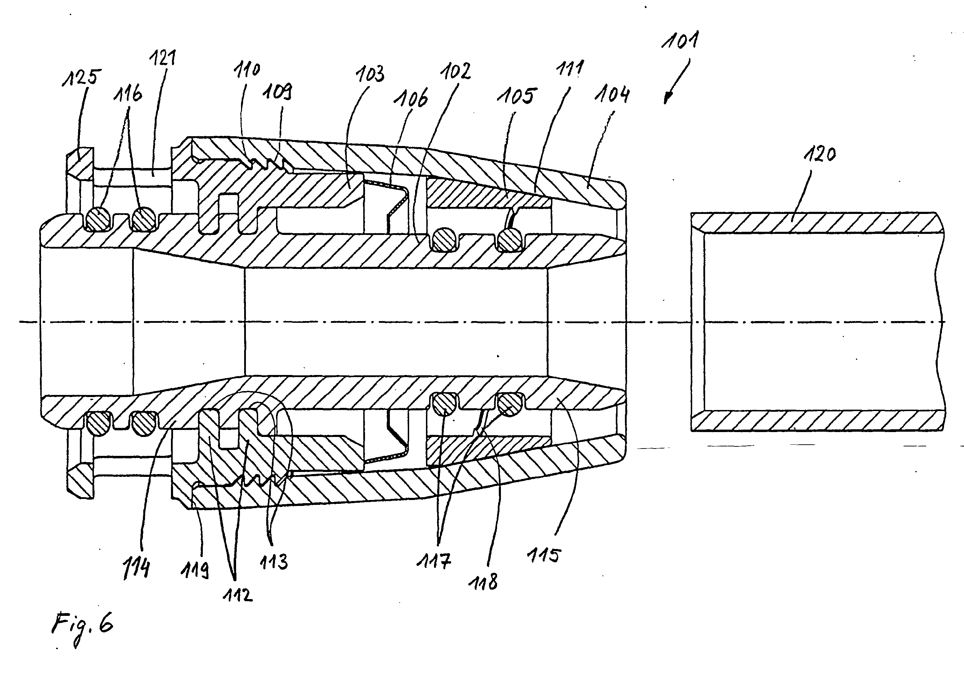

In den Figuren 6 bis 10 wird ein zweites Ausführungsbeispiel der Schnellkupplung gezeigt.

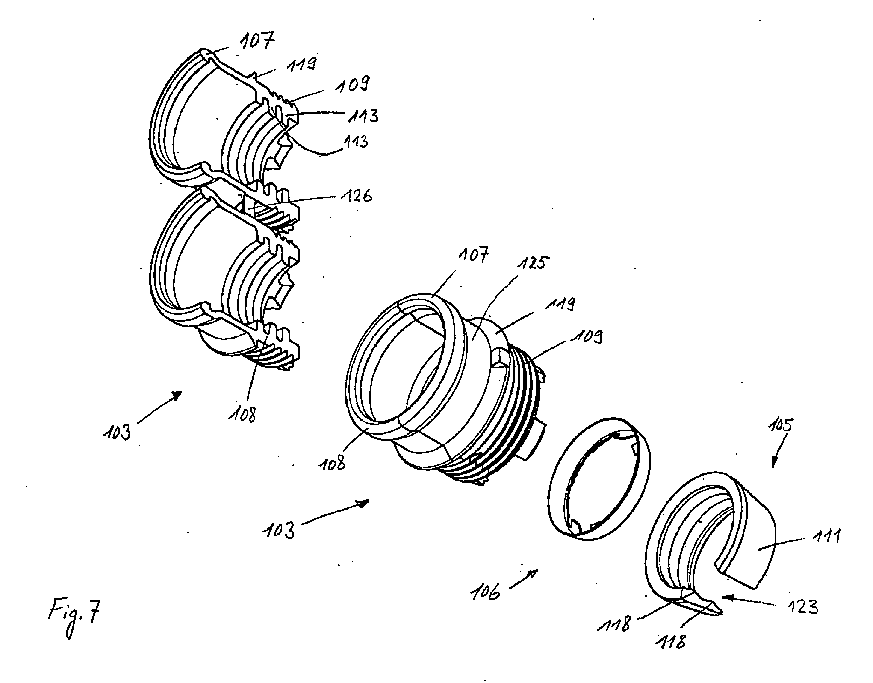

Die Figur 6 zeigt eine Schnittansicht der Schnellkupplung 101 für die Verbindung mit einer Rohrleitung 120, welche noch ausserhalb der Schnellkupplung zu sehen ist. Über einem nippelförmigen Innenteil 102, der als Träger für die Rohrleitung 120 dient, ist die Innenhülse 103 angeordnet, auf die wiederum die Aussenhülse 104 geschraubt ist. Im Inneren der Schnellkupplung 101 folgen in Richtung der Rohrleitung 120 gesehen auf die Innenhülse 103 der Zahnring 106 und der Klemmring 105. Die Innenhülse 103 ist zweiteilig aus zwei Halbschalenhälften 107 und 108 aufgebaut, wie es in der weiter unten beschriebenen Figur 7 gezeigt wird. Die Innenhülse 103 weist ein Aussengewinde 109 auf, welches mit dem an der Aussenhülse 104 angeordneten Innengewinde 110 zusammenwirkt. Der Klemmring 105 ist an der Mantelfläche 111 konisch ausgebildet, entsprechend an den konischen Innenbereich der Aussenhülse angepasst.

Weiterhin weist der Klemmring 105 im Innenbereich mindestens einen Vorsprung 118 auf. Die Innenhülse 103 weist Vorsprünge 112 auf, die in die in dem Innenteil angeordneten Rillen 113 eingreifen. Der Innenteil 102 weist mindestens zwei rohrförmige Bereiche 114 und 115 mit unterschiedlichen Durchmessern auf. Zur Abdichtung sind auf den rohrförmigen Bereichen 114 und 115 des Innenteils je zwei O-Ringe 116 und 117 angebracht. Der Anschlag 119 dient als Wegbegrenzung der Aussenhülse 104. Der Innenteil 103 weist an einem Ende eine Verlängerung 125 auf, in die Aussparungen 121 zur Materialersparnis eingebracht sind. Die Innenhülse 103 und/oder Aussenhülse 104 ist aus durchsichtigem Material, beispielsweise Kunststoff gefertigt.

In Figur 7 sind die Innenhülse 103, der Zahnring 106 und der Klemmring 105 dreidimensional dargestellt. Um die Montage zu ermöglichen, ist die Innenhülse aus zwei Halbschalen 107 und 108 gefertigt, wobei die Halbschalen 107 und 108 mittels eines Steges 126 verbunden sind. Alle anderen Bezugszeichen entsprechen denen der Figur 6. Im Übrigen weist diese Ausführungsform der Innenhülse 103 an der Verlängerung 125 keine Aussparungen 121 auf.

Der Zahnring 106 weist am Innenumfang Zähne 127, zur Arretierung der Rohrleitung 120 auf.

Der Klemmring 105 hat eine Unterbrechung 123. Der konische Bereich 111 und der Vorsprung 118 wurden bereits bei Figur 6 beschrieben.

Die Montage der Schnellkupplung geschieht in der Weise, dass in einem ersten Schritt nach dem Aufbringen der O-Ringe 116 und 117 die beiden Hälften 107 und 108 entsprechend passend auf das Innenteil 102 aufgebracht werden, wobei die Vorsprünge 112 der Innenhülse 103 in die Rillen 113 des Innenteils eingreifen. Die beiden Hälften 107 und 108 sind so gefertigt, dass sich im geschlossenen Zustand ein geschlossenes Aussengewinde 9 ergibt, welches mit dem Innengewinde 110, der Aussenhülse zusammenwirkt.

Im zweiten Schritt wird der Klemmring 105 und der Zahnring 106 in die Aussenhülse 104 eingelegt.

Im dritten Schritt wird schliesslich die Aussenhülse 104 auf die Innenhülse 103 bis zum Anschlag 119 aufgeschraubt.

Die Schnellkupplung 101 ist somit für den Einsatz montiert.

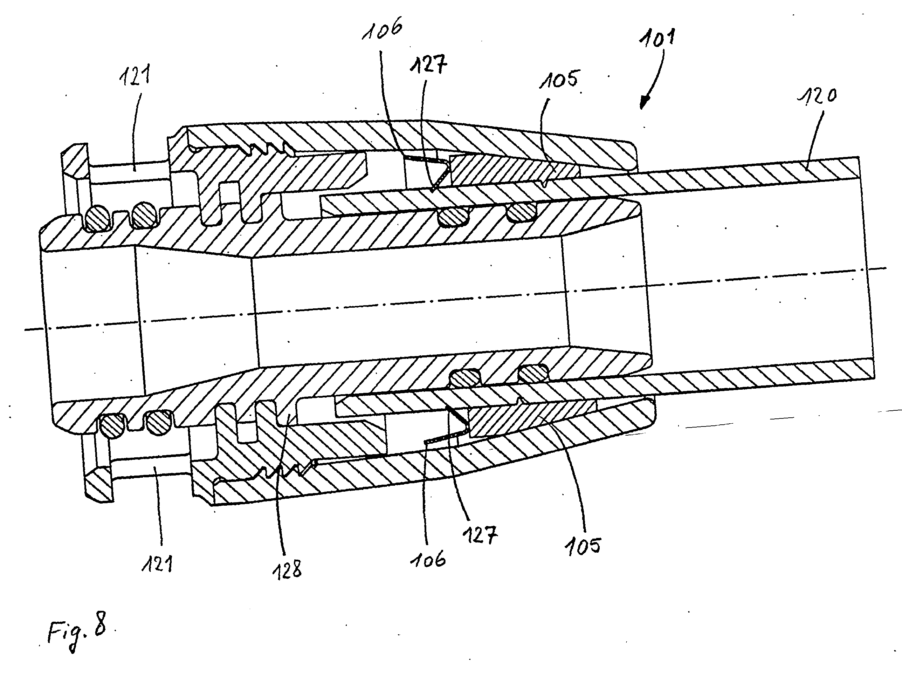

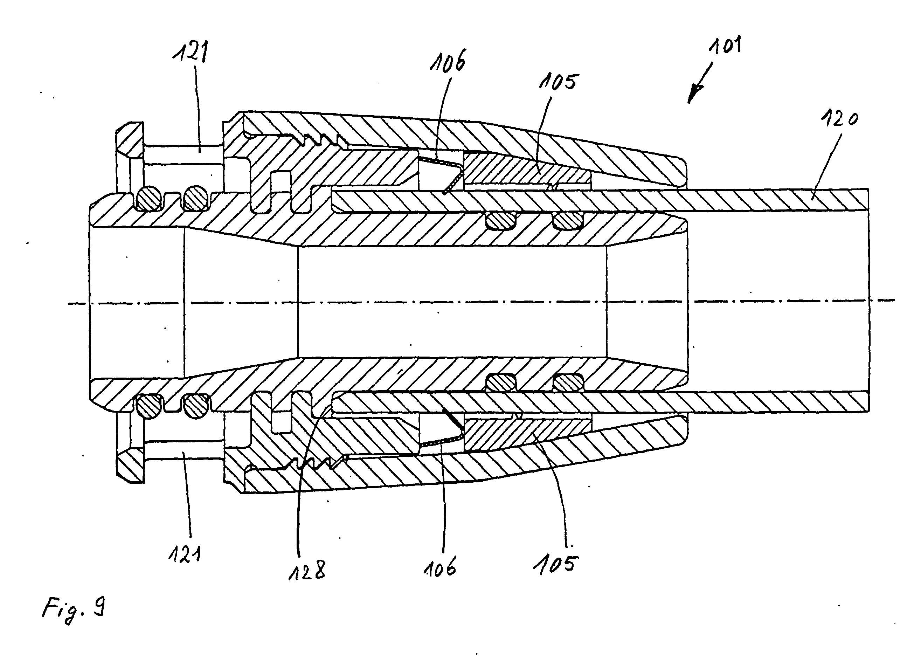

Die Funktionsweise der Schnellkupplung 101 ist in den Figuren 8 und 9 dargestellt. Im drucklosen Zustand wird die Rohrleitung 120 gemäss Figur 103 bis zum inneren Anschlag 128 in die Schnellkupplung 101 eingeführt. Wird die Rohrleitung 120 mit Druck beaufschlagt, so entsteht die Situation gemäss Figur 9. Die Rohrleitung 120 verschiebt sich etwas vom Anschlag 128 weg und wird aufgrund der im Zahnring 6 angeordneten Zähne 127 und mit dem Klemmring 105 festgehalten, so dass eine sichere Verbindung entsteht.

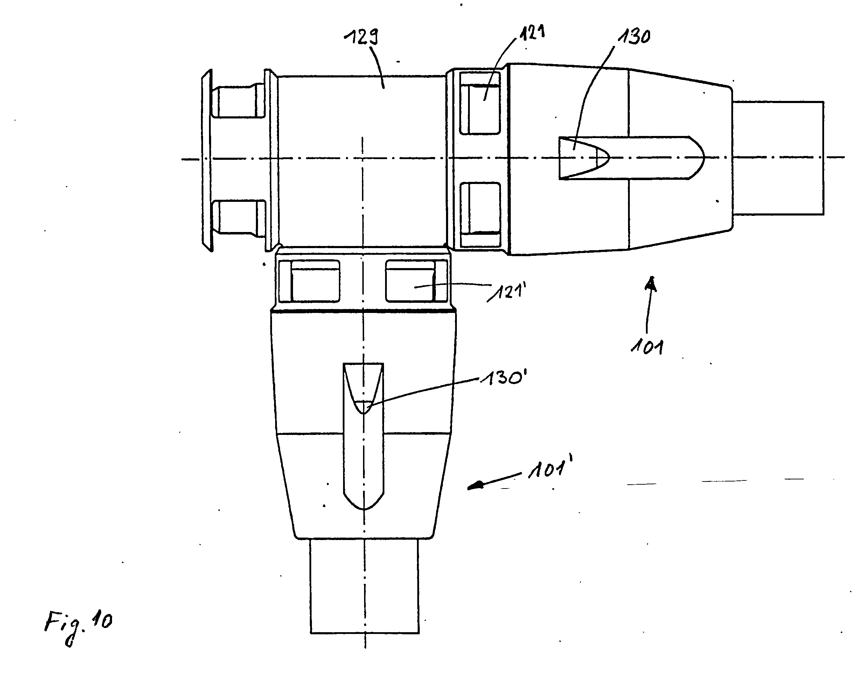

In Figur 10 ist ein Anwendungsfall der Schnellkupplung 101 gezeigt. Jeweils zwei Schnellkupplungen 101, 101' sind mit den Enden eines Fittings 129 verbunden. Zur Überprüfung einer sicheren Verbindung weisen die Schnellkupplungen 101, 101' Sichtfenster 130, 130' auf, oder sie bestehen aus einem durchsichtigen Material. Beim Verbinden der Kupplung mit dem Fitting wird ein akustisches Signal in Form eines "Klicks" erzeugt.

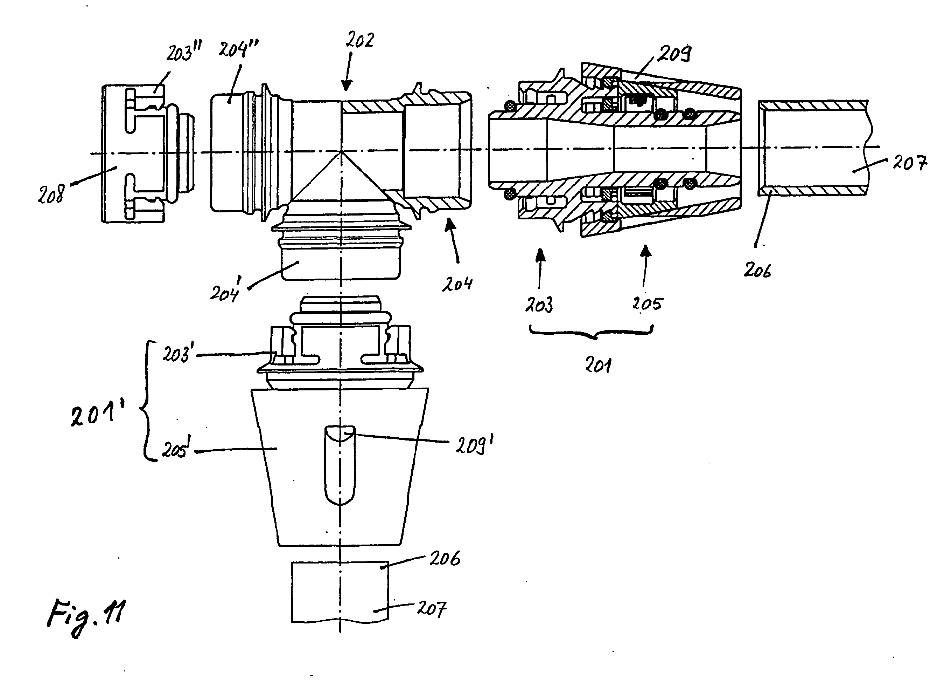

In den Figuren 11 bis 19 werden Schnellkupplungen gezeigt, die nicht Teile der Erfindung sind.

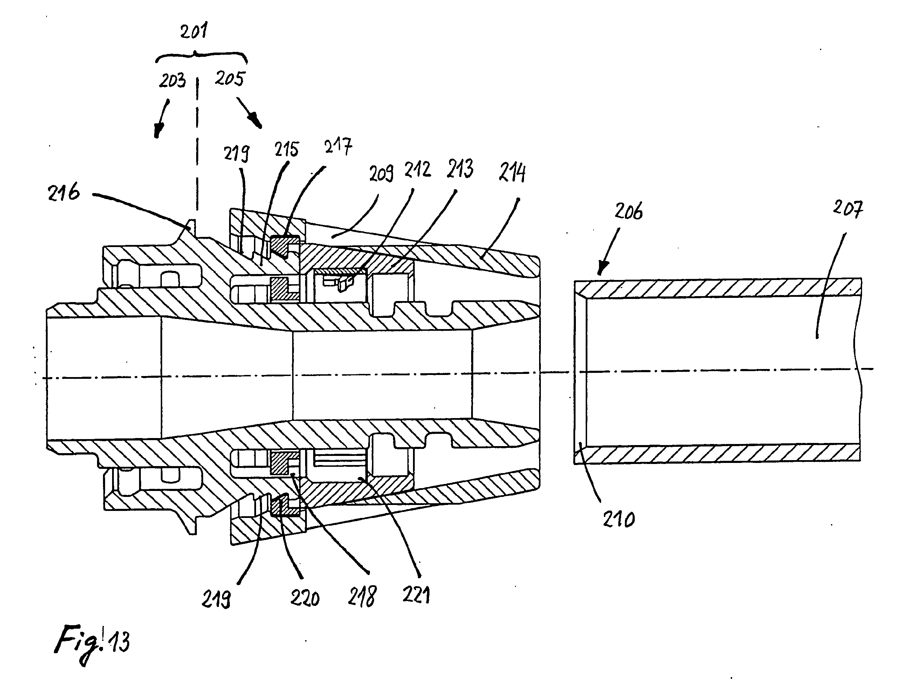

In Figur 11 ist ein Ausschnitt aus einem Rohrleitungssystem mit zwei Schnellkupplungen dargestellt. Die Schnellkupplung wird aufgebaut aus einem Adapter 201, 201' und einem Rohrverbindungsteil 202. Der Adapter 201,201' besteht aus einem Kupplungsbereich 203, der komplementär ausgebildet ist zu einem Kupplungsaufnahmebereich 204 des Rohrverbindungsteils 202 und aus einem Verbindungsbereich 205. Durch die komplementäre Ausbildung des Adapters 201,201' und des Rohrverbindungsteils 202 kann einfach und schnell eine Rohrleitungsverbindung hergestellt werden. Der Verbindungsbereich 205 des Adapters 201 dient zur Verbindung mit einem Ende 206 einer Rohrleitung 207 und wird im Einzelnen anhand der Figuren 13 bis 16 ausführlicher beschrieben. Das Rohrleitungssystem von Figur 11 umfasst ein T-förmiges Rohrverbindungsteil 202 mit der Möglichkeit zur Verbindung der Enden 206 von drei Rohrleitungen 207. Die Rohrleitungen 207 können aus Kunststoff, aus Metallkunststoffverbundwerkstoffen oder aus Leichtmetallwerkstoffen hergestellt sein.

In Figur 11 sind zwei Rohrleitungsenden 206 mit zwei unter einem Winkel von 90° zu einander angeordneten Kupplungsaufnahmebereichen 204, 204' verbindbar dargestellt. Mit dem dritten Kupplungsaufnahmebereich 204" ist keine Rohrleitung sondern ein Blindstopfen 208 verbindbar dargestellt. Das Ausführungsbeispiel von Figur 11 zeigt, dass mit der Kombination eines T-förmigen Rohrverbindungsteils 202 und eines Blindstopfens 208 unterschiedliche Anordnungen von Rohrleitungsenden 206 mit einander verbunden werden können. Es ist auch denkbar, dass die Kupplungsaufnahmebereiche 204, 204', 204" unterschiedliche Leitungsinnendurchmesser aufweisen, so dass auch Rohrleitungen mit unterschiedlichem Durchmesser mit einander verbunden werden können. Wegen dieser hohen Anpassungsfähigkeit an verschiedenen Betriebsverhältnissen wird das Rohrverbindungsteil 202 deshalb auch als Modul 202 bezeichnet. Der Blindstopfen 208 weist einen Kupplungsbereich 203" auf, der identisch ausgebildet ist wie der Kupplungsbereich 203, 203' des Adapters 201, 201'.

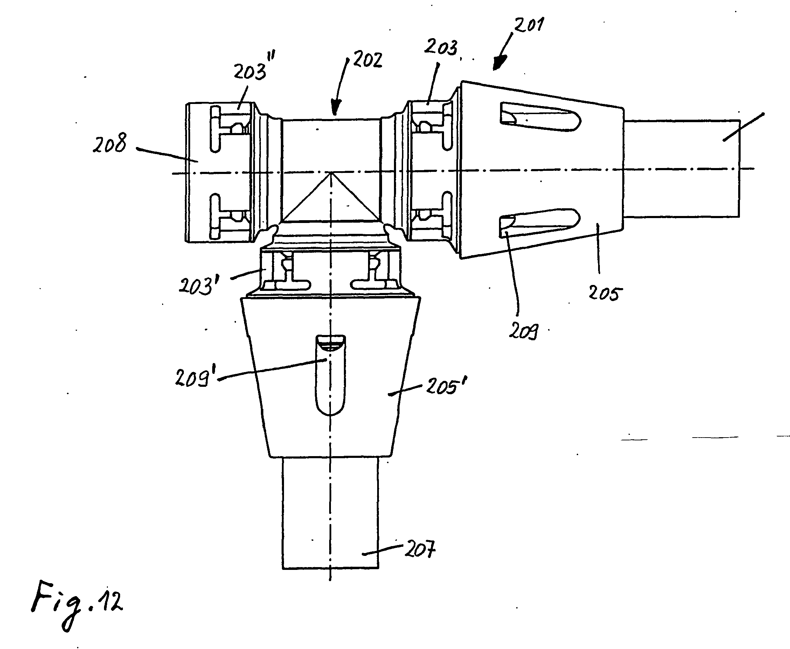

In Figur 12 ist der Ausschnitt aus dem Rohrleitungssystem von Figur 11 nochmals, hier jedoch im zusammengebauten Zustand dargestellt. In den Verbindungsbereichen 205, 205' sind Sichtfenster 209, 209' dargestellt. Durch diese Sichtfenster 209,209' kann beobachtet werden, dass der Verbindungsvorgang des Adapters 201 mit dem Rohr 207 vollständig abgeschlossen ist und dass eine sichere Verbindung hergestellt wurde.

Anhand der Schnitte der Figuren 13 bis 16 wird der Verbindungsvorgang des Rohrleitungsendes 206 mit dem Adapter 201 in den einzelnen Phasen des Vorganges beschrieben.

In Figur 13 sind das Ende 206 einer Rohrleitung 207 und einen Adapter 201 dargestellt. Der Adapter 201 ist so dargestellt, wie er auf der Baustelle angeliefert wird. Der Adapter 201 besteht aus dem Verbindungsbereich 205 und in axialer Richtung hieran angrenzend dem Kupplungsbereich 203 und ist im Wesentlichen aus Kunststoffmaterialien, beispielsweise in einem Spritzgussverfahren, hergestellt. Das Ende 206 der Rohrleitung 207 aus Kunststoff wird vor dem Zusammenbau innen kalibriert, das heisst auf den richtigen Innendurchmesser eingestellt und vom Ende her auf der Innenseite zur Ausbildung einer Fase 210 angefast. Im Verbindungsbereich 205 des Adapters 201 sind, von innen nach aussen gesehen, folgende Einzelteile ersichtlich: ein Mitnehmerring 211, ein Zahnring 212, ein Klemmkonus 213 und eine Verbindungshülse 214.

Im Verbindungsbereich 205 des Adapters 201 sind mindestens zwei Rastfinger 215 ausgebildet. Auf der Grenze zwischen dem Verbindungsbereich 205 und dem Kupplungsbereich 203 ist einen Anschlag 216 ausgebildet, der als Begrenzung der axialen Bewegung der Verbindungshülse 214 in Bezug auf den Verbindungsbereich 205 des Adapters 201 dient. Der Anschlag 216 ist wie ein rundum durchgehender ringförmiger Vorsprung am Aussenumfang des Adapters 201 ausgebildet. Der Mitnehmerring 211 ist passend in eine Nut 217 auf der Innenseite der Verbindungshülse 214 angeordnet.

Die Passung zwischen Verbindungshülse 214 und Mitnehmerring 211 ist derart genau, dass bei einer axialen Bewegung des Mitnehmerringes 211 die Verbindungshülse 214 die gleiche axiale Bewegung mitmacht. Sowohl der Mitnehmerring 211 als auch die Verbindungshülse 214 sind zumindest im Bereich der Nut 217 über den vollen Kreisumfang durchgehend ausgebildet und bilden eine stabile und belastbare Zusammensetzung. Diese Zusammensetzung dient bei dem Zusammenbau des Adapters 201 mit dem Rohrleitungsende 206 zur Übertragung der Kräfte, die für das Zusammenfügen aufgebracht werden müssen.

Der Mitnehmerring 211 ist wie eine Ringscheibe 211 ausgebildet. In der Ringscheibe 211 sind teilkreisförmige und in axialer Richtung durchgängige Öffnungen 218 ausgespart. Für jeden Rastfinger 215 ist jeweils eine Öffnung 218 vorgesehen. Die Rastfinger 215 sind auf einem Kreis in einem Abstand von der Innenwand des Verbindungsbereiches 205 angeordnet. Es können zwei, drei oder mehr Rastfinger 215 ausgebildet sein, die sich alle in axialer Richtung des Adapters 201 erstrecken. Die Rastfinger 215 weisen mehrere Raststufen 219 auf, die an den Rastfingern 215 in radialer Richtung hinausragend ausgebildet sind. Der Mitnehmerring 211 weist in den Öffnungen 218 jeweils eine Rastnase 220 auf, die in radialer Richtung nach innen hineinragend ausgebildet sind und die mit den Raststufen 219 der Rastfingern 215 zusammenwirken.

Der Zahnring 212 und der Klemmkonus 213 sind teilkreisförmig, das heisst nicht rundum durchgehend ausgebildet. Der Zahnring 212 und der Klemmkonus 213 sind auf einem Teil ihres Umfanges offen hergestellt, damit, wenn eine Kraft in radialer Richtung auf den Zahnring 212 und auf den Klemmkonus 213 wirkt, diese sich im Durchmesser verändern, das heisst verjüngen, können. Der Zahnring 212 ist eingepasst in eine Vertiefung 221 auf der Innenseite des Klemmkonuses 213.

Der Zahnring 212 und der Klemmkonus 213 bilden somit auch eine stabile Einheit. Bei einem Druck auf den Klemmkonus 213 von Aussen nach Innen wird sich der Durchmesser des Zahnringes 212 verringern. Der Zahnring 212 wird aus einem Metallband durch Stanzen, Schneiden und Biegen hergestellt und weist ein Profil auf, das genau auf die Aufgaben des Zahnringes abgestimmt ist. Der Klemmkonus 213 wird, wie alle übrigen Bestandteilen der Schnellkupplung in einem Spritzgussverfahren aus Kunststoff hergestellt.

Im Auslieferungszustand befindet sich der Klemmkonus 213 innerhalb der Verbindungshülse 214 auf einem Kreis mit dem grösstmöglichen Durchmesser. Der Mitnehmerring 211, der die Verbindungshülse 214 in axialer Richtung mitnimmt, befindet sich mit den Rastnasen 220 in Verrastung mit derjenige der Raststufen 219, die in axialer Richtung gesehen am weitesten von dem Kupplungsbereich 203 entfernt ist. Die Stirnfläche des Mitnehmerringes 211 liegt auf gleicher Höhe oder etwas höher als die Stirnseite der Rastfinger 215. Der Klemmkonus 213 liegt auf der Stirnseite des Mitnehmerringes 211 auf. In der Figur 13 sind O-Ringdichtungen, die in weiteren umlaufenden Nuten zur Abdichtung des Mediums gegen Aussen angeordnet werden können, weggelassen.

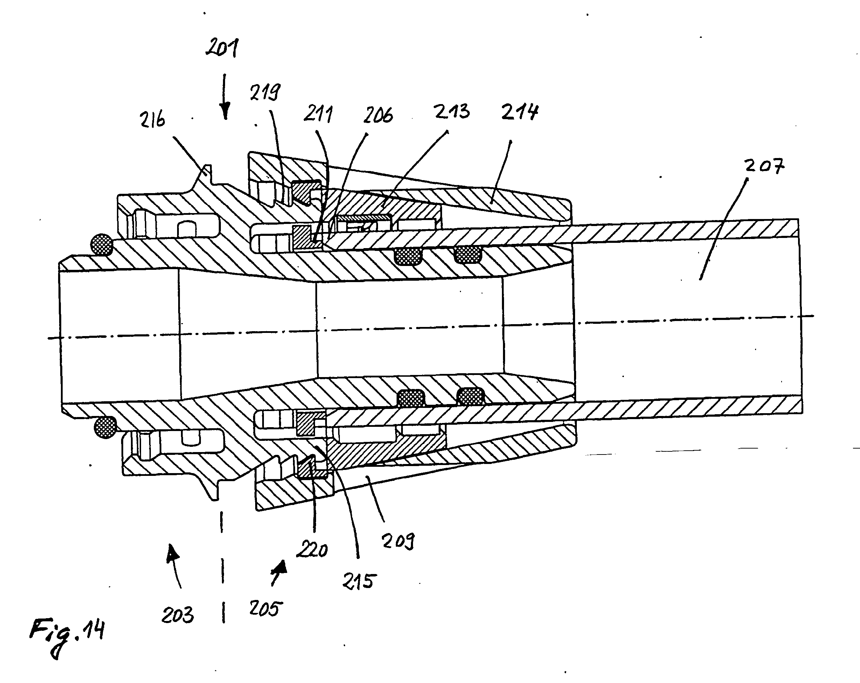

In Figur 14 ist im Vergleich zu Figur 13 der Adapter 201 mit dem Verbindungsbereich 205 gerade auf das Ende 206 der Rohrleitung 207 aufgesetzt. Auf der Baustelle wird der Installateur mit der einen Hand das freie Ende 206 der bereits verlegten flexiblen Rohrleitung 207 aus Kunststoff nehmen, von der Wand oder von dem Boden so weit als für die Verarbeitung nötig wegbiegen und mit der anderen Hand den Adapter 201 auf das Rohrleitungsende 206 aufstecken. In dem Zustand, der in Figur 14 dargestellt ist, wurde noch kein Druck auf das Ende 206 oder auf den Adapter 201 ausgeübt. Das Ende 206 der Rohrleitung 207 berührt gerade den Mitnehmerring 211 und der Klemmkonus 213 wurde noch nicht axial bewegt. Im Zustand von Figur 14 ist wie im Zustand von Figur 13 im Sichtfenster 209 noch immer der Klemmkonus 213 sichtbar. Durch das Sichtfenster 209 kann somit beobachtet werden, dass der Klemmkonus 213 sich in Bezug auf die Verbindungshülse 214 noch nicht bewegt hat.

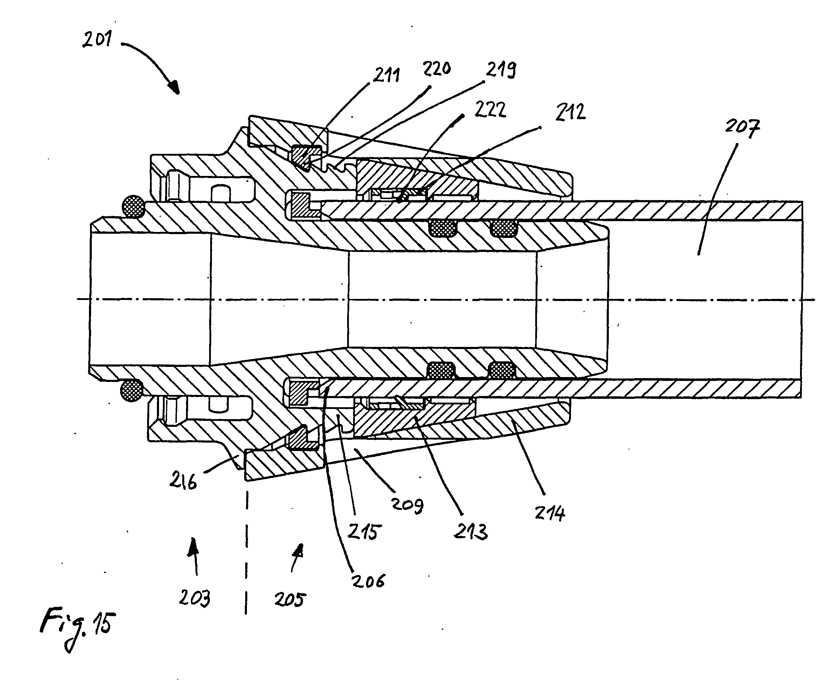

In Figur 15 ist der Adapter 201 nochmals, jedoch nach dem Aufstecken auf die Rohrleitung 207 und nach dem Zusammendrücken, dargestellt. Der Adapter 201 mit den Rastfingern 215 im Verbindungsbereich 205 wurde soweit als möglich durch die Öffnung 218 gestossen. Die Rastnase 220 des Mitnehmerringes 211 überspringt hierbei die Raststufen 219 der Rastfinger 215. Das Überspringen der Raststufen wird als hörbares und fühlbares Signal vom Installateur wahrgenommen. Weil vor der Stossbewegung das Ende 206 der Rohrleitung 207 auf dem Mitnehmerring 211 auflag, wird als Folge der Stossbewegung der Klemmkonus 213 in Bezug auf die Verbindungshülse 214 und in Bezug auf die Rohrleitung 207 in axialer Richtung bewegt. In Bezug auf die Verbindungshülse 214 bewegt sich die Rohrleitung 207 zwischen dem Zustand von Figur 14 und dem Zustand von Figur 15 nicht. Lediglich der Adapter 201 mit den Rastfingern 215 und der Klemmkonus 213 bewegen sich in Bezug auf die Rohrleitung 207.

Der Adapter 201 wird bis zum Anschlag 216 in die Verbindungshülse 214 eingeschoben. Weil der Klemmkonus 213 auf der Aussenseite konisch ausgebildet ist, und weil die Verbindungshülse 214 auf der Innenseite ebenfalls konisch ausgebildet ist, werden der Klemmkonus 213 und somit auch der Zahnring 212 als Folge dieser axialen Bewegung in radialer Richtung, das heisst in Richtung auf die Aussenwand der Rohrleitung 207, zusammengedrückt. Im Unterschied zu vielen anderen Schnellkupplungen, beispielsweise solchen mit Bajonettverschluss oder Überwurfmutter, wird die Kupplung nicht durch eine Dreh- oder Schraubbewegung, sondern durch eine lineare Stossbewegung hergestellt. Der Adapter 201 wird mit einem Stoss in axialer Richtung auf das Ende 206 der Rohrleitung 207 aufgesteckt und kann ohne Werkzeug zuerst mit der Rohrleitung 207 und anschliessend mit dem Rohrverbindungsteil 202 oder mit dem Modul 202 verbunden werden.

Der Zahnring 212 aus Metall weist am Innenumfang eine verteilt angeordnete Vielzahl von Zähnen 222 auf, von der in Figur 15 zwei Zähne 222 ersichtlich sind. Die Zähne 222 aus Metall schneiden in die Aussenwand der Kunststoffrohrleitung 207 ein. Im Sichtfenster 209 ist der Klemmkonus 213 nicht mehr länger sichtbar. Durch die Beobachtung des hörbaren und fühlbaren Signals der Rastnasen 220, die die Raststufen 219 überspringen und durch die Beobachtung des Sichtfensters 209 kann der Installateur sich vergewissern, dass der Adapter 201 sicher und vollständig mit dem Ende 206 der Rohrleitung 207 verbunden wurde. In dem Sichtfenster, oder in den Sichtfenstern 209, ist kein Klemmkonus 213, sondern lediglich die Rastfinger 215 oder, je nach Winkelstellung der Verbindungshülse 214 in Bezug auf den Rastfingern 215, die Aussenwand des Rohres 207 ersichtlich. Im Zustand von Figur 15 ist das Rohrleitungssystem noch drucklos, das heisst der Adapter wurde noch nicht mit dem Rohrverbindungsteil 202 oder dem Modul 202 verbunden und es wirkt noch kein Mediumsdruck auf das Rohrleitungssystem.

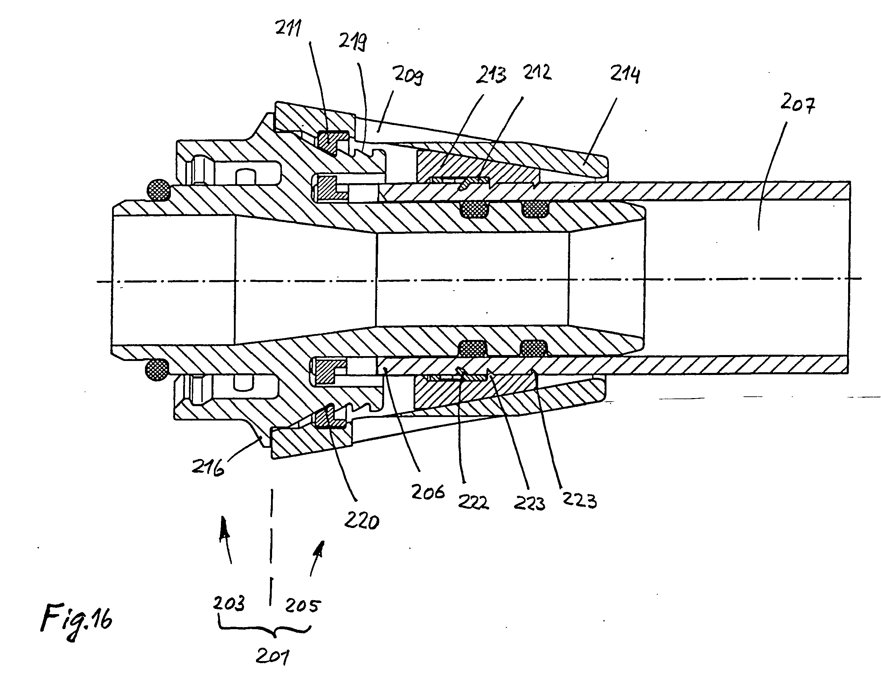

In Figur 16 ist die Verbindung des Adapters 201 mit dem Ende 206 der Rohrleitung 207 nochmals dargestellt. Im Zustand von Figur 16 wurde im Gegensatz zum Zustand von Figur 15 der Adapter 201 mit dem hier nicht dargestellten Rohrverbindungsteil 202 verbunden und das Rohrleitungssystem mit Mediumsdruck beaufschlagt. Durch den Mediumsdruck werden die Rohrleitung 207 und der Klemmkonus 213 leicht aus dem Adapter 201 hinausgedrückt.

In Figur 16 ist dieser Zustand leicht übertrieben gezeichnet dargestellt, um die Verhältnisse besser zu verstehen. Durch die Auszugsbewegung des Klemmkonus 213 als Folge der Druckerhöhung, der von der Verbindungshülse 214 radial gehalten wird, wird sich der Durchmesser weiter verringern. Die Zähne 221 des Zahnringes 212 werden weiter in die Aussenwand des Rohrleitungsende 206 einschneiden. In den Bereichen des Zahnringes 212, wo keine Zähne 222 nach innen gerichtet weggestanzt sind, weist der Zahnring ein im Wesentlichen zylindrisches Profil auf und wird sich flach auf die Aussenwand der Rohrleitung 207 anlegen. Das spezielle Profil des Zahnringes 212 verhindert, dass die Metallzähne 222 zu tief in das Kunststoffmaterial einschneiden. Auch die spezielle Ausbildung der Innenwand des Klemmkonus 213 mit einem ebenso zylindrischen Bereich und weiteren Kunststoffzähnen 223 trägt dazu bei, dass die Zähne 222, 223 nicht tiefer als eine genau definierte Tiefe in das Kunststoffmaterial einschneiden. Hiermit wird verhindert, dass bei zu hoher Auszugskraft das Rohrleitungsende 206 von den Metallzähnen 222 abgeschnitten wird.

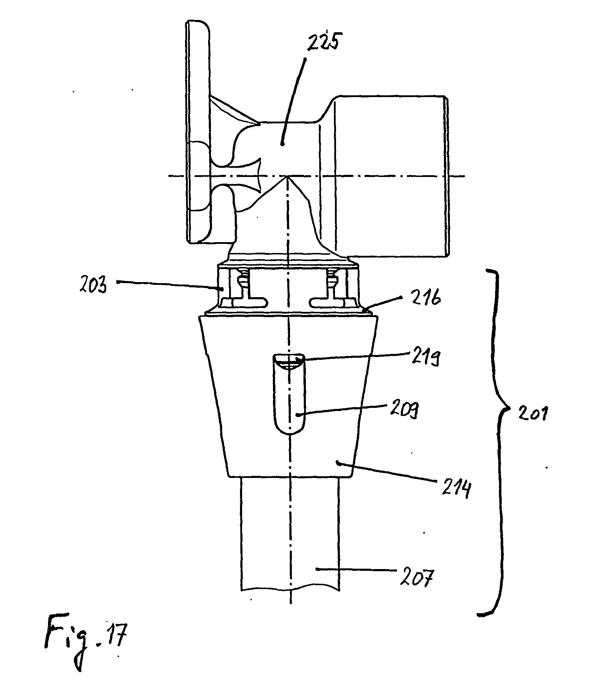

In den Figuren 17 bis 19 sind weitere Anwendungen der Schnellkupplung dargestellt , die nicht Teile der Erfindung sind. Figur 17 zeigt die Schnellkupplung aus den Figuren 11 bis 16 in Verbindung mit einem Anschluss 225 für Armaturen im Sanitärbereich.

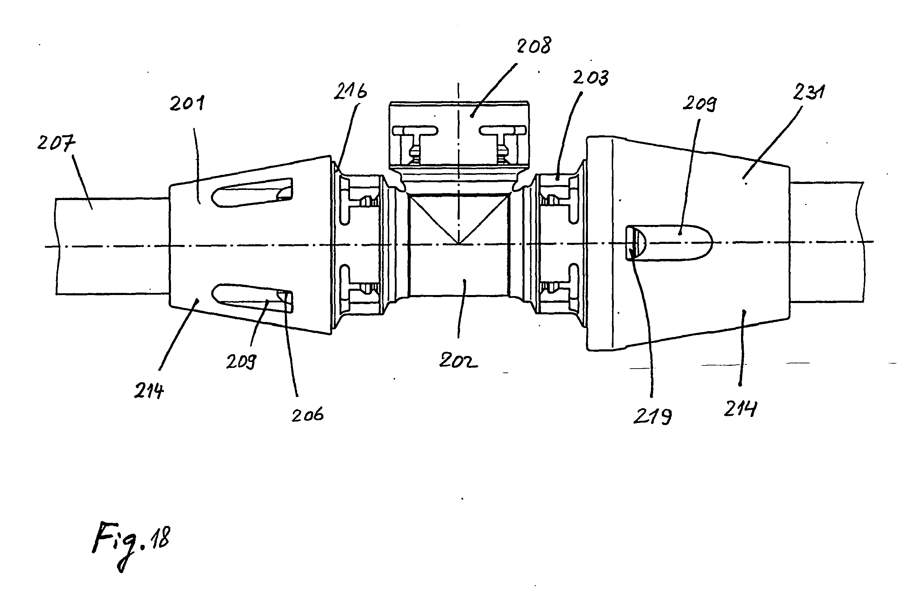

Figur 18 zeigt ein Rohrverbindungsteil 202 mit einem Blindstopfen 208 und zwei Adaptern 201, 231. Der Adapter 231 weist einen grösseren Durchmesser auf als der Adapter 201. Hiermit soll angedeutet werden, dass, unter Verwendung des gleichen Moduls 202 auch Reduktionen oder Übergänge mit unterschiedlichem Durchmesser hergestellt werden können. Das Modul 202 kann aus Kunststoff oder aus Metall hergestellt werden und ist somit an unterschiedlichen Rohrleitungswerkstoffen anpassbar.

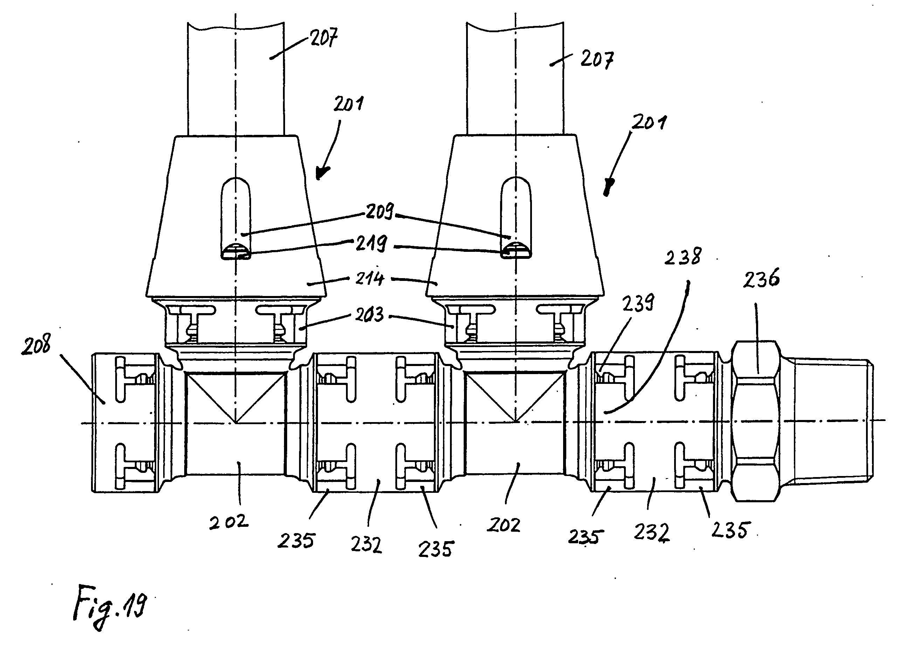

In Figur 19 sind zwei Adapter 201 und zwei Module 202 dargestellt, die mittels eines Zwischenstücks 232 miteinander verbunden werden. Das Zwischenstück 232 weist auf zwei gegenüberliegenden Seiten Kupplungsbereiche 235 auf, die identisch ausgebildet sind wie die Kupplungsbereiche 205 aus den Figuren 11 bis 16. Hiermit soll angedeutet werden, dass mit einer beliebigen Anzahl von Modulen 202 und Zwischenstücken 232 auch sogenannte Manifolds oder Verteilerarmaturen hergestellt werden können. Anstelle eines weiteren Moduls 202 kann auch ein Übergangsstück 236 mit einem Gewinde, beispielsweise ein Aussengewinde, auf das Zwischenstück 232 aufgesteckt werden. Die Ausbildung des Kupplungsbereiches 235 ist in Figur 19 mit vier aussenliegenden teilkreisförmigen und federnden Bereichen 238 mit Rasthaken 239 dargestellt. Die Rasthaken 239 in Figur 19 weisen radial nach Innen, können aber bei entsprechend umgekehrter Ausbildung des Kupplungsbereiches 235 auch nach Aussen weisend ausgeführt werden.

Die mit der Erfindung verbundenen Vorteile liegen insbesondere in einer einfachen Vormontage der Schnellkupplung selbst. Andererseits bietet sie eine sichere Verbindung der Rohrleitung mit der Kupplung. Die Schnellkupplung zeichnet sich durch besonders wenige leicht herstellbare Einzelteile aus.

## Patentansprüche

1. Schnellkupplung (1) für Rohre mit einem rohrförmigen Innenteil (2), einer Innenhülse (3), einem Klemmring (5) und einer Aussenhülse (4), **dadurch gekennzeichnet, dass** die Aussenhülse (4) einen zylindrischen Bereich mit mindestens zwei unterschiedlichen Innendurchmessern (d1, d2, d3) und einen konischen Bereich zur Aufnahme des Klemmringes (5) aufweist, und dass die Innenhülse (3) aus zwei nahezu gleichen halbkreisförmigen Schalenteilen (31,32) zusammengesetzt ist und dass die Schnellkupplung einen teilkreisförmige Zähne (61) aufweisenden Zahnring (6) aufweist.

2. Schnellkupplung nach Anspruch 1, **dadurch gekennzeichnet, dass** die beiden die Innenhülse (3) bildenden halbkreisförmigen Schalenteilen (31,32) mit einem Aussengewinde (36) versehen sind, auf das die mit einem Innengewinde (41) versehene Aussenhülse (4) aufschraubbar ist.

3. Schnellkupplung nach Anspruch 1 oder 2, **dadurch gekennzeichnet, dass** die Innenhülse (3) Finger (37) mit radial nach aussen weisenden Fingerflächen aufweist, die derart ausgebildet sind, dass der Zahnring (6) von den Fingern (37) getragen und zumindest in der Vormontage festgehalten wird.

4. Schnellkupplung nach mindestens einem der Ansprüche 1 bis 3, **dadurch gekennzeichnet, dass** die Innenhülse (3) am Innenumfang zwei nach innen gerichteten umlaufenden Vorsprünge (33,34) aufweist, die eine umlaufende Rille (35) zur Aufnahme eines dazupassenden weiteren Vorsprunges (24) am Aussenumfang des Innenteiles (2) bilden.

5. Schnellkupplung nach mindestens einem der Ansprüche 1 bis 4, **dadurch gekennzeichnet, dass** der Klemmring (5) in Umfangsrichtung einen Schlitz (54) aufweist und unter Vorspannung in dem konischen Bereich der Aussenhülse (4) angeordnet ist.

6. Schnellkupplung nach mindestens einem der vorherigen Ansprüche, **dadurch gekennzeichnet, dass** der Klemmring (5) am Innenumfang mindestens einen Vorsprung (53) aufweist.

7. Schnellkupplung nach mindestens einem der vorherigen Ansprüche, **dadurch gekennzeichnet, dass** die Aussenhülse (4) einen konisch geformten Bereich (42) zur Aufnahme des konisch geformten Klemmrings (5) aufweist.

8. Schnellkupplung nach mindestens einem der vorherigen Ansprüche, **dadurch gekennzeichnet, dass** die Innenhülse (3,31,32) am Aussenumfang einen über den ganzen Umfang angeordneten Anschlag (38) für die Aussenhülse (4) aufweist.

9. Schnellkupplung nach mindestens einem der vorherigen Ansprüche, **dadurch gekennzeichnet, dass** das Innenteil (2) mindestens zwei rohrförmige Bereiche mit unterschiedlichen Aussendurchmessern aufweist.

10. Schnellkupplung nach mindestens einem der vorherigen Ansprüche, **dadurch gekennzeichnet, dass** das Innenteil (2) mindestens zwei Rillen (21) zur Aufnahme von O-Ringdichtungen (22) zur Abdichtung des Innenteils (2) gegen eine Rohrleitung (20) und ein Rohrverbindungsteil (10) aufweist.

11. Schnellkupplung nach mindestens einem der vorherigen Ansprüche, **dadurch gekennzeichnet, dass** der Zahnring (6) in Umfangsrichtung geschlossen ist.

12. Schnellkupplung nach mindestens einem der vorherigen Ansprüche, **dadurch gekennzeichnet, dass** die Aussenhülse (4) und/oder Innenhülse (3,31,32) aus Kunststoff besteht.

13. Schnellkupplung nach mindestens einem der vorherigen Ansprüche, **dadurch gekennzeichnet, dass** die Aussenhülse (4) und/oder Innenhülse (3,31,32) durchsichtig sind.

14. Schnellkupplung nach mindestens einem der vorherigen Ansprüche, **dadurch gekennzeichnet, dass** in Achsrichtung gesehen auf dem Innenteil (2) zuerst die Innenhülse (3, 31, 32) angeordnet ist, gefolgt von dem Zahnring (6) und dem Klemmring (5), wobei die Aussenhülse (4) den Klemmring (5) und den Zahnring (12) übergreifend auf die Innenhülse (3, 31, 32) bis zum Anschlag (38) der Innenhülse (3, 31, 32) aufgeschraubt ist.

## Claims

1. Quick-action coupling (1) for pipes, with a tubular inner part (2), with an inner sleeve (3), with a clamping ring (5), and with an outer sleeve (4), **characterized in that** the outer sleeve (4) has a cylindrical region with at least two different inside diameters (d1, d2, d3) and a conical region for receiving the clamping ring (5), **in that** the inner sleeve (3) is composed of two virtually identical semicircular shell parts (31, 32) and **in that** the quick-action coupling comprises a toothed ring (6) having part-circular teeth (61).

2. Quick-action coupling according to Claim 1, **characterized in that** the two semicircular shell parts (31, 32) forming the inner sleeve (3) are provided with an external thread (36) onto which the outer sleeve (4) provided with an internal thread (41) can be screwed.

3. Quick-action coupling according to Claim 1 or 2, **characterized in that** the inner sleeve (3) has fingers (37) with radially outward-pointing finger surfaces, which are designed in such a way that the toothed ring (6) is carried by the fingers (37) and, at least during premounting, is held firmly.

4. Quick-action coupling according to at least one of Claims 1 to 3, **characterized in that** the inner sleeve (3) has, on the inner circumference, two inwardly directed peripheral projections (33, 34) which form a peripheral groove (35) for receiving a further projection (24), fitting with the latter, on the outer circumference of the inner part (2).

5. Quick-action coupling according to at least one of Claims 1 to 4, **characterized in that** the clamping ring (5) has a slot (54) in the circumferential direction and is arranged under pretension in the conical region of the outer sleeve (4).

6. Quick-action coupling according to at least one of the preceding claims, **characterized in that** the clamping ring (5) has at least one projection (53) on the inner circumference.

7. Quick-action coupling according to at least one of the preceding claims, **characterized in that** the outer sleeve (4) has a conically shaped region (42) for receiving the conically shaped clamping ring (5).

8. Quick-action coupling according to at least one of the preceding claims, **characterized in that** the inner sleeve (3, 31, 32) has, on the outer circumference, a stop (38), arranged over the entire circumference, for the outer sleeve (4).

9. Quick-action coupling according to at least one of the preceding claims, **characterized in that** the inner part (2) has at least two tubular regions with different outside diameters.

10. Quick-action coupling according to at least one of the preceding claims, **characterized in that** the inner part (2) has at least two grooves (21) for receiving O-ring seals (22) for sealing off the inner part (2) relative to a pipeline (20) and a pipe connection part (10).

11. Quick-action coupling according to at least one of the preceding claims, **characterized in that** the toothed ring (6) is closed in the circumferential direction.

12. Quick-action coupling according to at least one of the preceding claims, **characterized in that** the outer sleeve (4) and/or the inner sleeve (3, 31, 32) consist/consists of plastic.

13. Quick-action coupling according to at least one of the preceding claims, **characterized in that** the outer sleeve (4) and/or the inner sleeve (3, 31, 32) are/is transparent.

14. Quick-action coupling according to at least one of the preceding claims, **characterized in that** the inner part (2) has arranged on it, as seen in the axial direction, first the inner sleeve (3, 31, 32), followed by the toothed ring (6) and the clamping ring (5), the outer sleeve (4) being screwed, so as to engage over the clamping ring (5) and the toothed ring (12), onto the inner sleeve (3, 31, 32) as far as the stop (38) of the inner sleeve (3, 31, 32).

## Revendications

1. Raccord rapide (1) pour des tuyaux, comprenant une partie interne tubulaire (2), une douille interne (3), une bague de serrage (5), et une douille externe (4), **caractérisé en ce que** la douille externe (4) présente une zone cylindrique avec au moins deux diamètres intérieurs différents (d1, d2, d3) et une zone conique destinée à recevoir la bague de serrage (5), **en ce que** la douille interne (3) est composée de deux parties de coquille semi-circulaires (31, 32) approximativement identiques, et **en ce que** le raccord rapide comprend une bague dentée (6) présentant des dents partiellement circulaires (61).

2. Raccord rapide selon la revendication 1, **caractérisé en ce que** les deux parties de coquille semi-circulaires (31, 32) formant la douille interne (3) sont pourvues d'un filet extérieur (36), sur lequel la douille externe (4) pourvue d'un filet intérieur (41) peut se visser.

3. Raccord rapide selon la revendication 1 ou 2, **caractérisé en ce que** la douille interne (3) comporte des doigts (37) avec des faces de doigt orientées radialement vers l'extérieur, qui sont réalisées de telle manière que la bague dentée (6) soit portée et maintenue au moins lors du préassemblage par les doigts (37).

4. Raccord rapide selon au moins une des revendications 1 à 3, **caractérisé en ce que** la douille interne (3) présente à sa périphérie extérieure deux saillies périphériques (33, 34) dirigées vers l'intérieur, qui forment une gorge périphérique (35) destinée à recevoir une autre saillie (24) qui lui correspond sur la périphérie extérieure de la parie interne (2).

5. Raccord rapide selon au moins une des revendications 1 à 4, **caractérisé en ce que** la bague de serrage (5) présente une fente (54) en direction périphérique et est disposée sous précontrainte dans la zone conique de la douille externe (4).

6. Raccord rapide selon au moins une des revendications précédentes, **caractérisé en ce que** la bague de serrage (5) présente au moins une saillie (53) à sa périphérie intérieure.

7. Raccord rapide selon au moins une des revendications précédentes, **caractérisé en ce que** la douille externe (4) présente une zone de forme conique (42) destinée à recevoir la bague de serrage (5) de forme conique.

8. Raccord rapide selon au moins une des revendications précédentes, **caractérisé en ce que** la douille interne (3, 31, 32) présente à la périphérie extérieure une butée (38) disposée sur toute la périphérie pour la douille externe (4).

9. Raccord rapide selon au moins une des revendications précédentes, **caractérisé en ce que** la partie interne (2) présente au moins deux zones tubulaires ayant des diamètres extérieurs différents.

10. Raccord rapide selon au moins une des revendications précédentes, **caractérisé en ce que** la partie interne (2) présente au moins deux gorges (21) destinées à recevoir des joints toriques (22) pour assurer l'étanchéité de la partie interne (2) avec une tuyauterie (20) et une pièce de raccordement de tuyau (10).

11. Raccord rapide selon au moins une des revendications précédentes, **caractérisé en ce que** la bague dentée (6) est fermée en direction périphérique.

12. Raccord rapide selon au moins une des revendications précédentes, **caractérisé en ce que** la douille externe (4) et/ou la douille interne (3, 31, 32) se compose de matière plastique.

13. Raccord rapide selon au moins une des revendications précédentes, **caractérisé en ce que** la douille externe (4) et/ou la douille interne (3, 31, 32) sont transparentes.

14. Raccord rapide selon au moins une des revendications précédentes, **caractérisé en ce que,** en regardant dans la direction axiale, la douille interne (3, 31, 32) est d'abord disposée sur la partie interne (2), et est suivie de la bague dentée (6) et de la bague de serrage (5), la douille externe (4) étant vissée sur la douille interne (3, 31, 32)) en recouvrant la bague de serrage (5) et la bague dentée (12), jusqu'à la butée (38) de la douille interne (3, 31, 32).
